# EUROPEAN PATENT SPECIFICATION

(11) **EP 4 152 964 B1**
(45) Date of publication and mention of the grant of the patent: **20.08.2025**
(21) Application number: 21728028.8
(22) Date of filing: 20.05.2021
(51) Int. Cl.: A23N 12/08

(54) **COFFEE BEANS ROASTING APPARATUS**
VORRICHTUNG ZUM RÖSTEN VON KAFFEEBOHNEN
APPAREIL DE TORRÉFACTION DE GRAINS DE CAFÉ

(30) Priority: 20.05.2020 EP 20175610
(43) Date of publication of application: 29.03.2023
(73) Proprietor: Société des Produits Nestlé S.A., 1800 Vevey (CH)
(72) Inventor: DUBIEF, Flavien, Florent, 1424 Champagne (CH)
(74) Representative: Ducreux, Marie
(86) International application number: PCT/EP2021/063428
(87) International publication number: WO 2021/234071

(56) References cited:
- EP-A1- 3 214 954
- US-A- 6 051 266
- US-A1- 2009 304 886

## Description

### Field of the invention

The present invention relates to a coffee beans roasting apparatus.

### Background of the invention

Roasting of coffee beans at small scale that is at home or in shops and cafes is usually implemented with small sized apparatuses wherein coffee beans are agitated inside hot air. One type of apparatus uses a rotating perforated drum wherein coffee beans are introduced and tumbled while heat is supplied.

Another type of apparatus uses fluidized bed technology implementing a hot air fluid bed chamber. Within such a chamber, heated air is forced through a screen or a perforated plate under the coffee beans with sufficient force to lift the beans. Heat is transferred to the beans as they tumble and circulate within this fluidized bed.

Derived from an industrial roaster described in US 3964175, this technology has been adapted in small domestic devices like EP 3 214 954 A1, US4484064, US4494314, US4631838, US5269072 or US5564331.

Most of the roasters implementing fluidized bed technology present the same configuration of the key elements that are the roasting chamber, the heater and the air driver. Quite commonly and obviously, these elements are placed one above the other along a vertical axis, with the air driver positioned at the lowest position, the electrical resistance above. This configuration results in non-compact apparatuses.

In addition, due to this alignment of the different devices, it is frequent that small particles fall from the opened bottom of the chamber down on the heater and the air driver during the operation of the apparatus or during the operation of cleaning the upper parts at the top of the roasting chamber once the roasting apparatus is off.

These devices become rapidly dirtied and the heat enables dirtiness to stick to the surfaces of these devices. Often, these parts of the roasting apparatuses are not easily dismountable because they support the chamber : their cleaning requires a full dismounting of the apparatus or a limited cleaning with difficult access.

Moreover, this type of roasting apparatus frequently comprises a temperature probe positioned upstream the air heater in order to control the roasting profile applied to the coffee beans. In the same way, the temperature probe is positioned just below the chamber and becomes dirtied which affects its accuracy making the reproduction of roasting recipes less reliable.

The problem of compactness was solved in US 4,698,916 describing a small roaster implementing fluidized bed technology with a more compact design wherein the heater and the air driver can be put aside the bottom of the roasting chamber.

Yet, the problems of avoiding dirtiness and improving temperature measure remained.

An object of the present invention is to provide a roasting apparatus implementing a hot air fluid bed chamber wherein the roasting operation does not dirty the hot air generating devices, such as the air driver and/or the air heater, and/or the temperature probe.

### Summary of the invention

In a first aspect of the invention, there is provided an apparatus for roasting coffee beans according to Claim 1.

The roasting apparatus comprises a roasting chamber presenting a bottom opening and usually a top opening. The chamber extends along a chamber axis from said bottom opening and said axis is preferably essentially vertical in order to enable the production of a fluidized bed of hot air when hot air is introduced through the bottom opening.

Generally, the bottom opening comprises a grid to hold the beans inside the chamber while enabling the passage of hot air therethrough. The bottom opening can be designed to provide a particular movement to hot air entering the chamber. In one embodiment, the bottom opening can comprise blades or other geometry to direct the heated airflow in useful flow streams or patterns to customize the fluid bed and thereby the trajectories of the lofted beans during a roast.

The top opening enables the evacuation of smokes and particles generated during the roasting operation. It can also enable the introduction of beans to be roasted and the removal of roasted beans at the end of the roasting operation.

The apparatus comprises an air driver configured to drive a flow of air inside the roasting chamber through the bottom opening of said chamber. Usually, this air driver is an air blower or a fan designed to suck air form outside the housing and to blow air to the roasting chamber.

The apparatus comprises an electrical heater positioned upstream the bottom opening of the chamber and configured to heat the flow air before it is introduced inside the roasting chamber.

In the present roasting apparatus, the air driver and the electrical heater are positioned aside the area vertically below the bottom opening of said chamber.

Due to this position apart the area vertically downstream the bottom opening, small particles introduced with the coffee beans inside the chamber or generated during the roasting operation, for example due to separation of chaffs from the beans or due to beans scrubbing one to the other in the fluid bed, and falling during or after the roasting operation do not set down on the heater and the air driver.

In the same manner, if during a cleaning operation, the operator lets water fall through the bottom opening, then there is no risk that water drops contact the electrical heater which would create a short-circuit and potential fire risk when the apparatus is switched on.

Preferably, the air driver is oriented inside the housing in order to produce an initial flow of air flowing along an initial air axis, said initial air axis being different from the roasting chamber axis.

This orientation of the initial air axis different from the roasting chamber axis guarantees that the air driver is not aligned with the bottom opening of the chamber.

The apparatus comprises at least one guiding means to convert the direction of the flow of air :
- from the direction along the initial air axis at the air driver,
- into an upwardly direction along the roasting chamber axis at the bottom opening of the roasting chamber.

This guiding means can be a duct or a conduit configured to guide the initial air flow up to the bottom opening of the roasting chamber and designed to convert the direction of the initial airflow into a different direction that is the roasting chamber axis before the airflow reaches the bottom opening of the roasting chamber.

In an alternative to a duct, in a small roaster, the guiding means can be walls, baffles or chicanes guiding the air flow inside the housing without the need of adding a specific duct.

Preferably, the guiding means is configured to generate a balanced flow of air at the bottom opening of the roasting chamber.

By balanced, it is meant that the air flow is essentially homogeneous over the cross section at the bottom opening of the roasting chamber.

Balanced air flow can be obtained by mixing the air flow upstream the bottom opening of the roasting chamber. For example, the guiding means can comprise internal baffle means to mix air flow and/or the internal walls of the guiding means can be designed to mix the air flow.

In one preferred embodiment, the initial air axis forms an angle comprised between 90° and 180° with the upwardly rising roasting chamber axis.

Such a range of angles provides the advantage of positioning and orienting the air driver and the flow of air inside the housing in a compact manner relatively to the other devices of the apparatus, at least in terms of vertical compactness.

Compactness is an advantage for positioning the roasting apparatus in small rooms, such as kitchens.

When the initial air axis forms an angle of 180° with the roasting chamber axis, it means that the direction of the initial air axis at the air driver is opposed to the upwardly rising axis of the roasting chamber. Accordingly, the two axis are parallel to each other. The initial flow of air is oriented downwardly and then is converted in an upwardly rising flow of air at the bottom opening of the chamber. This operation can be obtained by introducing the initial air flow inside a U-shaped guiding means.

When the initial air axis forms an angle of 90° with the roasting chamber axis, it means that the initial air axis is perpendicular to the roasting chamber axis. Preferably, the roasting chamber axis is vertical and the initial air axis is horizontal.

Usually, the horizontal initial flow of air is positioned at a vertical level situated below the bottom opening of the roasting chamber.

The apparatus comprises a guiding means configured to convert the initial flow of air produced by the air driver in an upwardly flow of air oriented along the axis of the roasting chamber and to the bottom opening of the roasting chamber.

In particular, the guiding means comprises at least one vertically oriented cylindrical duct, and this duct comprises a lateral air inlet designed to introduce the flow of air, preferably tangentially, inside the duct.

This duct is internally shaped to convert the introduced horizontal flow of air in an upwardly swirling flow of air. In particular, the internal wall of the vertically oriented duct opposed to the air inlet can comprise a concavity. Due to the swirling action of the vertically oriented cylindrical duct, the air is well homogenised when it reaches the mixing chamber. This effect guarantees that all the coffee beans are roasted at the same temperature and there is no discrepancy of temperature in different zones of the chamber.

The vertically oriented duct of the guiding means can comprise embossed threads to guide air flow in an upwardly swirling movement. If the guiding means comprises a horizontal duct guiding air to the lateral air inlet of the vertically oriented duct, this horizontal duct can comprise embossed threads to guide air flow too, in particular in a swirling movement.

The guiding means starts controlling the movement of the air before it flows through the bottom opening of the chamber. The advantage of this swirling effect is that :
- it enables the operation of the air driver at a lower power while generating the same air flow.
- it helps mixing the air flow upstream the bottom opening and getting a homogeneous temperature of the air flow before entering the chamber.

In addition, the vertically oriented duct extends downwards the lateral air inlet and the bottom end of said duct is opened or openable.

Consequently, small dirty particles or drops falling from the roasting chamber during the roasting operation can be collected below the chamber at the openable bottom end of this duct or below the end of this duct if this duct end is opened for example in a collector or tray positioned below and easily accessible like a drawing plate.

Usually, at least one temperature probe is positioned in the at least one guiding means and downstream the heater. Generally, this temperature probe is used to regulate the power of the heater based on a feedback loop control.

In one embodiment, at least one temperature probe can be positioned aside the area vertically below the bottom opening of the roasting chamber. This position enables acquisition of accurate measure of temperature of air introduced inside the roasting chamber due to its close position to the chamber while limiting the risk of dirtiness.

Preferably, the at least one temperature probe is positioned at a distance downstream of the heater where the gradients of temperature across the cross section are reduced. In particular the guiding means can comprise means to homogeneously mix air upstream the temperature probe which helps to provide an accurate temperature regulation ; as a result, the temperature probe will measure a well averaged value of temperature in the air flow.

In one preferred embodiment several temperature probes can be used and positioned in the same cross section of the guiding device to improve accuracy.

In another embodiment, at least one temperature probe can be positioned aside the area vertically below the bottom opening of the roasting chamber. Due to the swirling action of the vertically oriented cylindrical duct, the air is well homogenised when it reaches that probe and the measure is accurate.

In another embodiment, at least one temperature probe can be positioned inside the chamber.

These different embodiments related to the position of the probes can be combined and several probes can be positioned at the different places to increase accuracy and depending if the preferred desired advantage is accuracy or cleanliness.

Preferably, at least a part of the guiding means is removable from the housing in order to facilitate cleaning and maintenance.

Preferably at least a part of the walls of the guiding means are covered with a second wall. This embodiment provides a better heat saving along the path of the hot air flow. Heat losses through the walls are reduced.

Preferably, at least a part of the walls of the guiding means is made of a low thermal capacity material.

The roasting chamber can be removable from the housing. Removal can happen to introduce and remove beans therefrom or to be able to get access to and clean the guiding duct positioned just below the bottom opening of the chamber, for example by drawing up a tray positioned at the bottom end of the vertical duct.

In a particular embodiment, the apparatus can comprise more than one air driver, each air driver being connected to one common manifold configured to guide air flows from said drivers into an upwardly direction along the roasting chamber axis at the bottom opening of the roasting chamber.

In this particular roasting apparatus, the presence of several air drivers connected to a common manifold, which is itself connected to the bottom opening of roasting chamber, presents the advantage of using smaller air drivers and then improving compactness. Actually, one powerful air driver usually requires a lot of space due to the radius of its fan. Having several smaller air drivers facilitates the space arrangement which results in a more compact apparatus.

In addition, providing several air drivers and/or heaters can also help to save energy by activating devices depending on the quantity of beans to be roasted and/or on the temperature profiles to be applied to the beans.

Preferably, each air driver is positioned in a respective duct to guide the air flow to the manifold.

Such an apparatus can comprise one heater only, for example positioned in the manifold or alternatively can comprise several electrical heaters, for example one electrical heater associated to each fan and positioned upstream the manifold in a duct guiding air flow to the manifold.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

Specific embodiments of the invention are now described further, by way of example, with reference to the following drawings in which :
- Figure 1 is a schematic view of a roasting apparatus according the state of the art,
- Figure 2 is a perspective view of the roasting unit of a roasting apparatus according the invention,
- Figure 3 is a cross section view of the roasting unit of Figure 2 vertical along the vertical plane extending through the horizontal duct 5 and the chamber 1,
- Figure 4 is a cross section view of the roasting unit of Figure 2 along the horizontal plane extending through the horizontal duct 5,
- Figure 5 illustrates schematically different configurations for a roasting apparatus according to the invention.

### Detailed description of exemplary embodiments

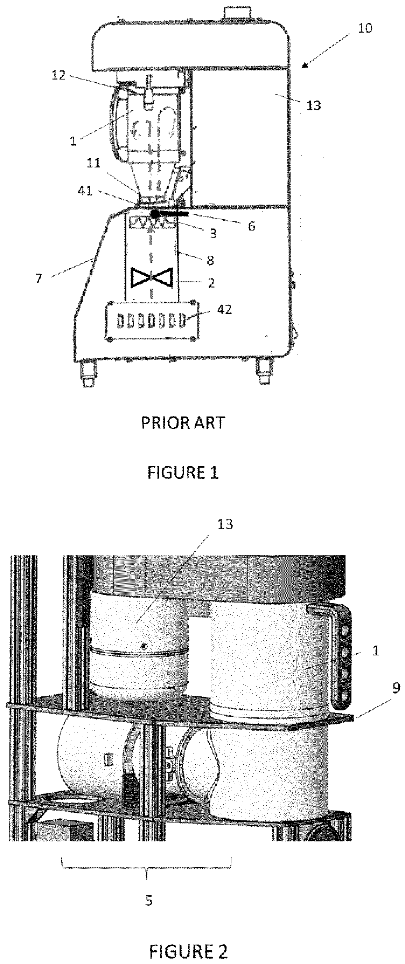

**Figure 1** shows an illustrative side view part of a roasting apparatus 10 according to the prior art. Functionally, the roasting apparatus 10 is operable to roast coffee beans hold in a chamber 1 by means of a flow of hot air introduced inside this chamber. The apparatus comprises a housing 7 and a roasting unit.

The roasting unit is operable to receive and roast coffee beans.

The roasting unit typically comprises at a second level of the roasting apparatus 10 : a chamber 1, an air flow driver 2, a heater 3, which are sequentially described.

The chamber 1 is configured to receive and hold the coffee beans introduced by the operator. In the preferred embodiment, the chamber 1 is removable from the housing 4. The chamber can be put aside the roasting apparatus :
- for the introduction or the removal of coffee beans, or
- for cleaning and maintenance of the chamber once it is removed, or
- for cleaning of the vertical housing part behind the chamber.

In one embodiment, this chamber can be non-removable, in particular when the introduction and and removal of the coffee beans can be done automatically, for example as described in WO2012059484 or if the chamber is easily accessible for cleaning.

The bottom opening 11 of the chamber is configured to enable air to pass through, specifically it can comprise a perforated plate on which the beans can lie and through which air can flow upwardly. This perforated blade can comprise perforation designed to provide the air flow with a specific flow pattern inside the chamber. The chamber 1 comprises a handle in order to enable the user to remove the chamber from the housing and hold it outside the housing.

A chaff collector 13 is in flow communication with the chamber 1 to receive chaffs that progressively separate from the beans and due to their light density are blown off to the chaff collector.

The air flow driver 2 is operable to generate a flow of air (dotted lines arrows) in direction of the bottom of the chamber. The generated flow is configured to heat the beans and to agitate and lift the beans. As a result the beans are homogenously heated. Specifically, the air flow driver can be a fan powered by a motor. Air inlets 42 can be provided inside the housing in order to feed air inside the housing, the air flow driver blowing this air upwardly though a passage 8 in direction of the chamber 1 as illustrated by dotted lines arrows.

The heater 3 is operable to heat the flow of air generated by the air flow driver 2. The heater is an electrical resistance positioned between the fan 2 and the bottom opening 11 of the chamber with the result that the flow of air is heated before it enters the chamber 1 to heat and to lift the beans. The heater 3 is positioned just below an air outlet hole 41 in the housing fitting with the bottom opening 11 of the chamber.

The heater 3 is operable to apply a roasting profile to the beans, this roasting profile being defined as a curve of temperature against time. A temperature probe 6 is positioned upstream the electrical heater to measure the temperature of the hot air flow entering the chamber.

When the chamber is mounted to the housing, the bottom 11 of the chamber is connected through an air outlet hole 71 to the top end of the air passage 8. The top opening 12 of the chamber is connected to a smoke and particulates evacuation device (not illustrated).

As obvious from the relative position of the chamber, the heater and the air driver, small particles introduced inside the chamber or generated during the roasting operation can fall through the bottom opening 11 and the outlet 41 on the temperature probe 6, the electrical heater 3 and on the air driver 2. When the coffee beans are roasted to a high level, drops of coffee oil can fall too on the heater and the air driver.

Due to the heat in this area of the apparatus, these particles and drops easily stick to these devices and with time creates a greasy, sticky layer of burnt material. The impacts are :
- on the air driver : dirty aspect, reduced efficiency because change of the weight, loss of performance due to cross section reduction, vibrations, noise with dust from ambient air sticking to the fan ,
- on the electrical heater : dirty coating on heating element (which can be resistive wire, infrared, ...) generating poor heat transfer coefficient and non-desired odours of burning particles, for example during pre-heating of the roaster, reduced airflow passages decreasing efficiency of heat transfer,
- on the temperature probe that becomes less and less reliable and that will drift in measured value and reactivity after some time.

During cleaning operation, water droplets ingress can also create short circuits in heater and fan with a risk of short circuit, electric shock, device damage or fire.

If as illustrated the chamber 1 is removable from the housing 7, a tiny access to the upper part of the heating unit is possible but cleaning cannot be correctly and completely done. In some roasting apparatus, the chamber is even not removable.

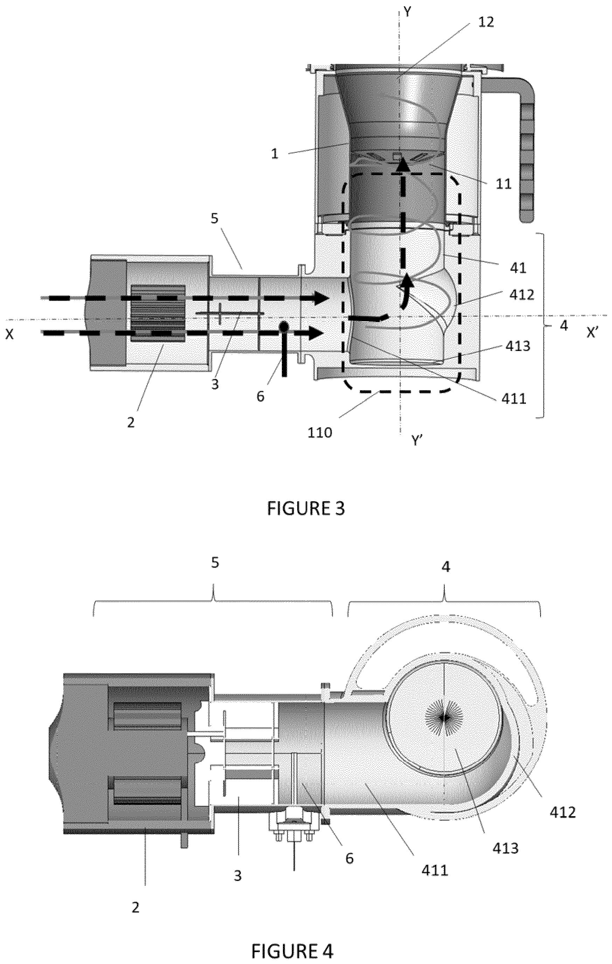

**Figure 2** is a perspective view of the roasting unit of a roasting apparatus according the invention. The chassis 9 supports the roasting chamber 1 and a chaff collector 13. Below the chamber 1, a horizontal duct 5 contains the air driver and the electrical heater as illustrated in the vertical cross section view of the roasting unit in **Figure 3****.**

The air driver 2 is oriented in order to produce an initial flow of air (dotted lines) flowing along an initial air axis XX', that is horizontal and different from the roasting chamber axis YY' that is vertical. In this configuration the air driver 2 and the electrical heater 3 are positioned aside the area 110 vertically below the bottom opening 11 of the roasting chamber. Accordingly, when particles fall from the bottom opening 11, they do not set on the heater 3 or the air driver 2.

The apparatus comprises a guiding means or junction device 4 configured to convert the horizontal initial flow of air produced by the air driver 2 in an upwardly flow of air oriented along the axis YY' of the roasting chamber and to the bottom opening 11 of the roasting chamber.

The junction device 4 comprises a vertically oriented cylindrical duct 41. This duct 41 comprises a lateral air inlet 411 designed to introduce the horizontal flow of air inside the duct. Preferably the horizontal flow of air is introduced tangentially inside the cylindrical duct as illustrated in **Figure 4****.** This configuration facilitates the conversion of the horizontal flow of air in an upwardly swirling flow or air. This swirling effect can be improved by the design of a concavity 412 facing the air inlet 411 and guiding the air in an upwardly ascending movement. As a result, the global direction of the air flow is changed from horizontal to vertical (thick dotted line in Figure 3), but the local shape of the air flow can be a swirl as illustrated by small line in Figure 3.

Alternatively, in a simpler design, the guiding device can be conduit with a 90° elbow.

The vertically oriented duct 41 extends downwards the lateral air inlet 411 down to a bottom end 413. This bottom end enables the collection of particles falling from the bottom opening of the chamber. Preferably, this bottom end 413 is openable so that the operator can remove particles during cleaning operation. In an alternative design, the bottom end 413 can be opened and a collector plate can be positioned below to receive particles.

At least one temperature probe 6 is positioned in the horizontal duct 5 downstream the heater. Again, this position of the probe prevents deposit of dirtiness on its surface which would impact the correct measure of temperature and a correct rosting of beans in the chamber.

In this configuration, the chamber 1 is removable from the chassis which enables the operator to access easily to the top part of the junction device for cleaning.

Preferably, a part of the guiding device such as the junction device 4 can be made removable from the chassis for an easier cleaning outside the apparatus. Since this part does not hold the heater 3 and the air driver 2, it does not comprise any electrical connection and removal by simple mechanical disconnection can be implemented.

In the illustrated embodiment a part of the walls of the guiding device such as the walls of the junction device 4 are covered with a second wall 415 which reduces heat loss.

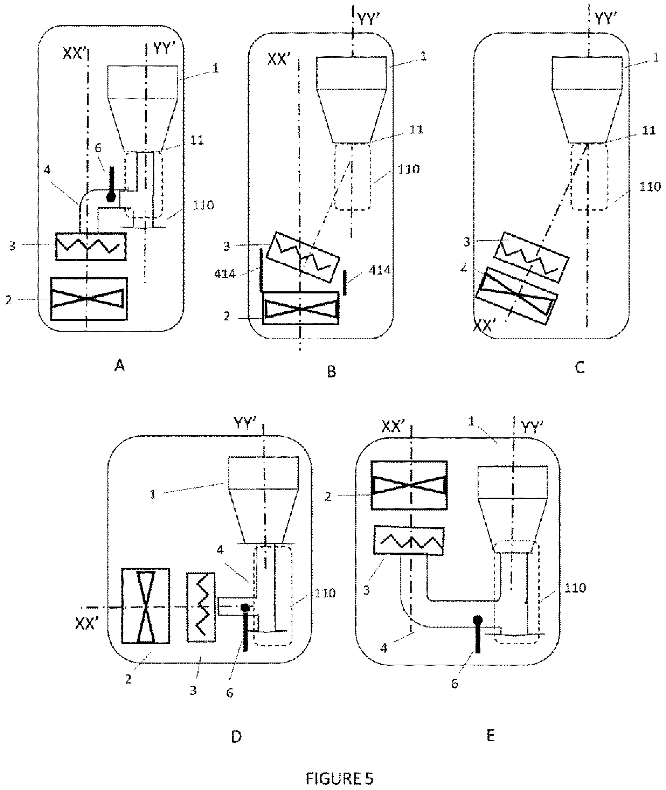

**Figure 5** illustrates schematically other embodiments of the roasting apparatus with different positions and orientations of the air driver 2 and the heater 3 relatively to the roasting chamber 1.

In all cases, the air driver 2 and the electrical heater 3 are positioned aside the area 110 vertically below the bottom opening 11 of the roasting chamber.

In each case, the air driver 2 is oriented inside the housing in order to produce an initial flow of air flowing along an initial air axis XX' that is different from the roasting chamber axis YY'. The chamber is configured to create a fluidic bed of hot air to roast the beans and as such extends essentially vertically from the bottom opening 11. The roasting chamber axis YY' is essential vertical and the initial air axis XX' differ by their positions and optionally by their angles to the vertical.

In case A, the initial air axis XX' is vertical and oriented upwardly but it is positioned horizontally aside from the area 110. A duct is designed to guide air from the upward vertical direction at the air driver to the bottom opening of the chamber.

In case B, similarly to the above case A, the initial air axis XX' is vertical and oriented upwardly but it is positioned horizontally aside from the area 110. The heater can comprise several channels acting as a guiding device. By orienting the heater along an axis of about 30 ° with vertical in direction of the bottom opening, upwardly vertical air flow from the air driver 2 is heated and guided by the heater 3 in direction of the bottom opening 11. Baffles 414 between the air driver 2 and the heater 3 can serve as guiding device too. Other baffles, walls or chicanes can be present between the heater 3 and the bottom opening 11 and serve as a guiding device to the bottom opening 11.

In an alternative to case B, in case C, the initial air axis XX' defines an angle of about 30° with the upwardly rising roasting chamber axis YY'. The heater 3 is positioned on said axis XX' too. By orienting the air driver 2 and the heater 3 along an axis of about 30 ° with vertical in direction of the bottom opening, the air driver and the heater can still be positioned aside the area 110 below the bottom opening 11. Baffles, walls or chicanes between the air driver, the heater and the bottom opening can serve as guiding device.

In case D, the initial air axis XX' is horizontal and defines an angle of 90° with the upwardly rising roasting chamber axis YY'. This case corresponds to the preferred embodiment illustrated in Figures 2 to 4. This position of the air driver and the heater provides the advantage of designing a compact roasting apparatus, the height being reduced compared to the configurations of cases A to C.

Case E provides a compact configuration too : the initial air axis XX' is vertical and oriented downwardly that is defines an angle of 180° with the upwardly rising roasting chamber axis YY'. A U-shaped duct converts the air flow from the direction along the initial air axis at the air driver into the upwardly direction along the roasting chamber axis at the bottom opening of the roasting chamber.

This configuration enables a good mixing of hot air before it contacts the temperature probe. As a result the risk of having a gradient of temperature across the section of the guiding device at the position of the probe 6 is reduced, the measure of temperature is more accurate and the control of the heater to apply a roasting profile in the chamber is more efficient.

Although the invention has been described with reference to the above illustrated embodiments, it will be appreciated that the invention as claimed is not limited in any way by these illustrated embodiments.

Variations and modifications may be made without departing from the scope of the invention as defined in the claims.

As used in this specification, the words "comprises", "comprising", and similar words, are not to be interpreted in an exclusive or exhaustive sense. In other words, they are intended to mean "including, but not limited to".

### List of references in the drawings :

| | | |
|---|---|---|
| roasting chamber | | 1 |
| | bottom opening | 11 |
| | area below bottom opening | 110 |
| | top opening | 12 |
| air driver | | 2 |
| heater | | 3 |
| junction device | | 4 |
| duct | | 41 |
| | inlet | 411 |
| | concavity | 412 |
| | bottom end | 413 |
| | baffle | 414 |
| | second wall | 415 |
| duct | | 5 |
| temperature probe | | 6 |
| housing | | 7 |
| air passage | | 8 |
| chassis | | 9 |
| chaff collector | | 13 |

## Claims

1. Apparatus (10) for roasting coffee beans comprising :
- a housing (7),
- a roasting chamber (1) presenting a bottom opening (11), said chamber extending along a chamber axis, preferably essentially vertical, from said bottom opening, and said bottom opening comprising a grid to retain coffee beans inside the chamber,
- an air driver configured to drive a flow of air inside the roasting chamber from the bottom of said chamber,
- an electrical heater (3) configured to heat air driven inside the roasting chamber,
wherein the air driver (2) and the electrical heater (3) are positioned aside the area vertically below the bottom opening (11) of the roasting chamber, and
- the air driver (2) is oriented inside the housing (7) in order to produce an initial flow of air flowing along an initial air axis, said initial air axis being different from the roasting chamber axis, and
- the apparatus comprises guiding means (4) configured to convert the initial flow of air produced by the air driver (2) in an upwardly flow of air oriented along the axis of the roasting chamber and to the bottom opening (11) of the roasting chamber, and
- said guiding means (4) comprises at least one vertically oriented cylindrical duct (41), said duct (41) comprising a lateral air inlet (411) designed to introduce the flow of air, preferably tangentially, inside the duct, and **characterized in that**
- said vertically oriented cylindrical duct (41) is internally shaped to convert the flow of air introduced through the lateral air inlet (411) in an upwardly swirling flow of air, and
- the vertically oriented duct (41) extends downwards the lateral air inlet (411) and the bottom end (413) of said duct is opened or openable.

2. Apparatus according to the precedent claim, wherein the guiding means is configured to generate a balanced flow of air at the bottom opening of the roasting chamber.

3. Apparatus according to Claim 1 or 2, wherein the initial air axis forms an angle comprised between 90 and 180° with the upwardly rising roasting chamber axis.

4. Apparatus according to the precedent claim, wherein the air driver (2) is oriented inside the housing (7) in order to produce an initial flow of air oriented horizontally and at a vertical level situated below the bottom opening (11) of the roasting chamber.

5. Apparatus according to any one of the precedent claims, wherein at least one temperature probe (6) is positioned in the at least one guiding means and downstream the heater..

6. Apparatus according to the precedent claim wherein at least one temperature probe (6) is positioned aside the area (110) vertically below the bottom opening of the roasting chamber.

7. Apparatus according to the precedent claim wherein at least one temperature probe (6) is positioned at the downstream side of the vertically oriented cylindrical duct (41),

8. Apparatus according to any one of the precedent claims, wherein at least one temperature probe (6) is positioned inside the chamber.

9. Apparatus according to any one of the precedent claims, wherein the at least one part of the guiding means is removable from the housing.

10. Apparatus according to any one of the precedent claims, wherein at least a part of the walls of the guiding means are covered with a second wall (415).

11. Apparatus according to any one of the precedent claims, wherein the roasting chamber (1) is removable from the housing (7).

12. Apparatus according to any one of the precedent claims, wherein said apparatus comprises more than one air driver, each air driver being connected to one common manifold configured to guide air flows from said more than one driver into an upwardly direction along the roasting chamber axis at the bottom opening of the roasting chamber.

## Patentansprüche

1. Einrichtung (10) zum Rösten von Kaffeebohnen, umfassend:
- ein Gehäuse (7),
- eine Röstkammer (1), die eine Bodenöffnung (11) zeigt, wobei sich die Kammer entlang einer Kammerachse, vorzugsweise im Wesentlichen vertikal, von der Bodenöffnung aus erstreckt, und die Bodenöffnung umfassend ein Gitter, um Kaffeebohnen innerhalb der Kammer zurückzuhalten,
- einen Lufttreiber, der konfiguriert ist, um einen Luftstrom innerhalb der Röstkammer aus dem Boden der Kammer zu treiben,
- ein elektrisches Heizelement (3), das konfiguriert ist, um innerhalb der Röstkammer getriebene Luft zu erwärmen,
wobei der Lufttreiber (2) und das elektrische Heizelement (3) neben dem Bereich vertikal unterhalb der Bodenöffnung (11) der Röstkammer positioniert sind, und
- der Lufttreiber (2) innerhalb des Gehäuses (7) ausgerichtet ist, um einen anfänglichen Luftstrom zu erzeugen, der entlang einer anfänglichen Luftachse strömt, wobei sich die anfängliche Luftachse von der Röstkammerachse unterscheidet, und
- die Vorrichtung ein Führungsmittel (4) umfasst, das konfiguriert ist, um den anfänglichen Luftstrom, der durch den Lufttreiber (2) erzeugt wird, in einen Luftstrom nach oben umzuwandeln, der entlang der Röstkammerachse und zu der Bodenöffnung (11) der Röstkammer ausgerichtet ist, und
- das Führungsmittel (4) mindestens einen vertikal ausgerichteten zylindrischen Kanal (41) umfasst, der Kanal (41) umfassend einen seitlichen Lufteinlass (411), der gestaltet ist, um den Luftstrom, vorzugsweise tangential, innerhalb des Kanals einzuführen, und **dadurch gekennzeichnet, dass**
- der vertikal ausgerichtete zylindrische Kanal (41) innen geformt ist, um den durch den seitlichen Lufteinlass (411) eingeführten Luftstrom in einen nach oben wirbelnden Luftstrom umzuwandeln, und
- der vertikal ausgerichtete Kanal (41) sich nach unten zu dem seitlichen Lufteinlass (411) erstreckt und das Bodenende (413) des Kanals offen ist oder geöffnet werden kann.

2. Vorrichtung nach dem vorstehenden Anspruch, wobei das Führungsmittel konfiguriert ist, um an der Bodenöffnung der Röstkammer einen ausgeglichenen Luftstrom zu generieren.

3. Vorrichtung nach Anspruch 1 oder 2, wobei die anfängliche Luftachse mit der nach oben verlaufenden Röstkammerachse einen Winkel zwischen 90 und 180° ausbildet.

4. Vorrichtung nach dem vorstehenden Anspruch, wobei der Lufttreiber (2) innerhalb des Gehäuses (7) ausgerichtet ist, um einen anfänglichen horizontal ausgerichteten Luftstrom und auf einer vertikalen Ebene, die sich unterhalb der Bodenöffnung (11) der Röstkammer befindet, zu erzeugen.

5. Vorrichtung nach einem der vorstehenden Ansprüche, wobei mindestens ein Temperaturfühler (6) in dem mindestens einen Führungsmittel und stromabwärts des Heizelements positioniert ist.

6. Vorrichtung nach dem vorstehenden Anspruch, wobei mindestens ein Temperaturfühler (6) neben dem Bereich (110) vertikal unterhalb der Bodenöffnung der Röstkammer positioniert ist.

7. Vorrichtung nach dem vorstehenden Anspruch, wobei mindestens ein Temperaturfühler (6) an der stromabwärtigen Seite des vertikal ausgerichteten zylindrischen Kanals (41) positioniert ist.

8. Vorrichtung nach einem der vorstehenden Ansprüche, wobei mindestens ein Temperaturfühler (6) innerhalb der Kammer positioniert ist.

9. Vorrichtung nach einem der vorstehenden Ansprüche, wobei der mindestens eine Teil des Führungsmittels von dem Gehäuse abnehmbar ist.

10. Vorrichtung nach einem der vorstehenden Ansprüche, wobei mindestens ein Teil der Wände des Führungsmittels mit einer zweiten Wand (415) bedeckt ist.

11. Vorrichtung nach einem der vorstehenden Ansprüche, wobei die Röstkammer (1) von dem Gehäuse (7) abnehmbar ist.

12. Vorrichtung nach einem der vorstehenden Ansprüche, wobei die Vorrichtung mehr als einen Lufttreiber umfasst, wobei jeder Lufttreiber mit einem gemeinsamen Verteiler verbunden ist, der konfiguriert ist, um Luftströme von dem mehr als einen Treiber in einer Richtung nach oben entlang der Röstkammerachse an der Bodenöffnung der Röstkammer zu führen.

## Revendications

1. Appareil (10) permettant de torréfier des grains de café comprenant :
- un logement (7),
- une chambre de torréfaction (1) présentant une ouverture de fond (11), ladite chambre s'étendant le long d'un axe de chambre, de préférence essentiellement vertical, à partir de ladite ouverture de fond, et ladite ouverture de fond comprenant une grille pour retenir les grains de café à l'intérieur de la chambre,
- un dispositif d'entraînement d'air conçu pour entraîner un flux d'air à l'intérieur de la chambre de torréfaction en provenance du fond de ladite chambre,
- un dispositif de chauffage électrique (3) configuré pour chauffer l'air entraîné à l'intérieur de la chambre de torréfaction,
dans lequel le dispositif d'entraînement d'air (2) et le dispositif de chauffage électrique (3) sont positionnés à côté de la zone située verticalement sous l'ouverture de fond (11) de la chambre de torréfaction, et
- le dispositif d'entraînement d'air (2) est orienté à l'intérieur du logement (7) afin de produire un flux d'air initial s'écoulant le long d'un axe d'air initial, ledit axe d'air initial étant différent de l'axe de chambre de torréfaction, et
- l'appareil comprend un moyen de guidage (4) conçu pour convertir le flux d'air initial produit par le générateur d'air (2) en un flux d'air ascendant orienté le long de l'axe de la chambre de torréfaction et vers l'ouverture de fond (11) de la chambre de torréfaction, et
- ledit moyen de guidage (4) comprend au moins un conduit cylindrique orienté verticalement (41), ledit conduit (41) comprenant une entrée d'air latérale (411) destinée à introduire le flux d'air, de préférence tangentiellement, à l'intérieur du conduit, et **caractérisé en ce que**
- ledit conduit cylindrique orienté verticalement (41) est formé intérieurement pour convertir le flux d'air introduit par l'entrée d'air latérale (411) en un flux d'air tourbillonnant vers le haut, et
- le conduit orienté verticalement (41) s'étend vers le bas de l'entrée d'air latérale (411) et l'extrémité de fond (413) dudit conduit est ouverte ou ouvrable.

2. Appareil selon la revendication précédente, dans lequel le moyen de guidage est conçu pour générer un flux d'air équilibré au niveau de l'ouverture de fond de la chambre de torréfaction.

3. Appareil selon la revendication 1 ou 2, dans lequel l'axe d'air initial forme un angle compris entre 90 et 180 ° avec l'axe ascendant de chambre de torréfaction.

4. Appareil selon la revendication précédente, dans lequel le dispositif d'entraînement d'air (2) est orienté à l'intérieur du logement (7) de manière à produire un flux d'air initial orienté horizontalement et à un niveau vertical situé sous l'ouverture de fond (11) de la chambre de torréfaction.

5. Appareil selon l'une quelconque des revendications précédentes, dans lequel au moins une sonde de température (6) est positionnée dans l'au moins un moyen de guidage et en aval du dispositif de chauffage.

6. Appareil selon la revendication précédente, dans lequel au moins une sonde de température (6) est positionnée à côté de la zone (110) verticalement en dessous de l'ouverture de fond de la chambre de torréfaction.

7. Appareil selon la revendication précédente, dans lequel au moins une sonde de température (6) est positionnée sur le côté en aval du conduit cylindrique orienté verticalement (41).

8. Appareil selon l'une quelconque des revendications précédentes, dans lequel au moins une sonde de température (6) est positionnée à l'extérieur de la chambre.

9. Appareil selon l'une quelconque des revendications précédentes, dans lequel l'au moins une partie du moyen de guidage est amovible à partir du logement.

10. Appareil selon l'une quelconque des revendications précédentes, dans lequel au moins une partie des parois du moyen de guidage est recouverte d'une seconde paroi (415).

11. Appareil selon l'une quelconque des revendications précédentes, dans lequel la chambre de torréfaction (1) est amovible à partir du logement (7).

12. Appareil selon l'une quelconque des revendications précédentes, dans lequel ledit appareil comprend plus d'un dispositif d'entraînement d'air, chaque dispositif d'entraînement d'air étant relié à un collecteur commun conçu pour guider les flux d'air dudit plus d'un dispositif d'entraînement d'air dans une direction ascendante le long de l'axe de chambre de torréfaction au niveau de l'ouverture de fond de la chambre de torréfaction.
